# EUROPEAN PATENT APPLICATION

(11) **EP 1 667 025 A1**
(43) Date of publication of application: **07.06.2006**
(21) Application number: 04028480.4
(22) Date of filing: 01.12.2004
(51) Int. Cl.: G06F 11/34

(54) **Apparatus and method for monitoring bus signals and for measuring the duration of events indicated thereby**

(71) Applicant: Infineon Technologies AG, 81669 München (DE)
(72) Inventor: Lemarié, Sébastien, 06400 Cannes (FR); Labarre, Eric, 06800 Cagnes sur mer (FR)
(74) Representative: Graf Lambsdorff, Matthias

(57) **Abstract**

An apparatus (HW_BLOCK) that is coupled to a bus (BUS_1, BUS_2, BUS_3) transferring digital signals (addr_x, data_x, ctrl_x) comprises a detection mean (TRIG_BUS_1, TRIG_BUS_2, TRIG_BUS_3) for detecting digital signals (addr_x, data_x, ctrl_x) that are transferred on the bus (BUS_1, BUS_2, BUS_3) and that fulfil at least one pre-determined condition. The apparatus (HW_BLOCK) also comprises a measurement mean (MEASURE_CTRL_BLOCK) for measuring the duration the condition is continuously fulfilled by the digital signals (addr_x, data_x, ctrl_x) transferred on the bus (BUS_1, BUS_2, BUS_3).

## Description

Apparatus and method for monitoring bus signals and for measuring the duration of events indicated by bus signals

The invention relates to an apparatus and a method used for monitoring bus signals and for measuring the duration of an event that is indicated by the bus signals.

A goal pursued in the development of semiconductor circuits is to reduce chip size and power consumption. In order to attain this goal information is needed about how a particular system is running. For instance, a better understanding of bus activities, processor charge, memory accesses, software load, interrupt duration, debugging etc. will help to improve the system. This knowledge will also help to develop software for the system more efficiently.

In order to obtain these information, bus watchers are employed that break/freeze the bus once an event is triggered and detected. For similar purposes debug tools and software bus monitoring tools are also employed. The drawback of these tools known up to now is that they are intrusive. For example they modify timings or the behaviour of the application and use processor resources and bus bandwidth. As a consequence of their intrusive nature these tools cannot reflect the real platform behaviour.

It is therefore an object of the present invention to provide a non-intrusive apparatus for monitoring bus signals. A method for the same purpose shall also be provided.

The above formulated object, on which the invention is based, is achieved by an apparatus according to claim 1 and a method according to claim 13.

Preferred and advantageous embodiments of the apparatus according to claim 1 are subject matter of claims 2 to 12. Preferred and advantageous embodiments of the method according to claim 13 are subject matter of claims 14 to 17.

In accordance with the present invention, an apparatus is coupled to a bus. The coupling can be implemented by a high-ohmic connection between the bus and inputs of the apparatus. Over the bus digital signals are transferred. The apparatus comprises a detection mean and a measurement mean.

The task of the detection mean is to detect digital signals that are transferred on the bus and that fulfil at least one pre-determined condition. If a digital signal exhibits the pre-determined characteristic, the detection mean generates an output signal on its output terminal and passes the output signal on to the measurement mean. The output signal of the detection mean is on a pre-determined logical level as long as the at least one pre-determined condition is fulfilled by at least one digital signal. Switching the output signal of the detection mean to the pre-determined logical level triggers the time measurement of the measurement mean.

The measurement mean measures the time period that the condition is fulfilled without any interrupt by at least one digital signal transferred on the bus. For this purpose, the measurement mean measures the time period during that the output signal of the detection mean exhibits the pre-determined logical level.

The apparatus according to the invention allows the user to monitor bus signals without modifications on timings of processors, memories or hardware peripherals. The apparatus according to the invention thus provides a non-intrusive way to collect important information on processor usage or load, memory accesses and bus load.

The knowledge of the duration of the activity of digital signals with the pre-determined characteristics allows the user to examine if an event takes longer or shorter than expected or occurs at the same time as another event occurs.

These relevant information provide a better understanding on the design and the protocol stack and their implementations. This will help concept engineers to reduce chip size and power consumption. Furthermore these information allow concept engineers to optimise the width and frequency of busses and memories. The real-time information obtained by the apparatus according to the invention also help hardware/software system engineers to efficiently debug/develop software on complex platform system, such as multi-core systems, matrix busses or DMAs.

The detection mean advantageously comprises a comparison mean. The comparison mean compares the digital signals transferred on the bus to pre-determined signals or values. Moreover, the detection mean can also advantageously comprise a mask mean. The mask mean examines whether the digital signals transferred on the bus fit into a pre-determined scheme. This allows to detect a pre-determined type of digital signals transferred on the bus.

In order to measure the duration that a digital signal fulfils the at least one pre-determined condition, the measurement mean advantageously comprises a reference clock. The reference clock can for instance be a GSM frame, 10,000 processor clock cycles or several 32 kHz clock cycles. The time reference can be defined and configured by the user.

The digital signals that are monitored by the apparatus according to the invention can be data or addresses or control signals.

The detection mean advantageously comprises registers for storing data defining the at least one pre-determined condition.

The apparatus according to the invention advantageously comprises a control mean that configures the detection mean.

In order to configure the detection mean, the control mean is able to write data in the registers of the detection mean.

The control mean is advantageously programmable by the user.

In accordance with one advantageous configuration of the apparatus according to the invention, the apparatus is realized as a hardware apparatus. This makes it possible to run the apparatus without using resources of the system under investigation.

The pre-determined conditions, for which the detection mean scans the bus, can be pre-determined addresses or address ranges and/or pre-determined bus operation signals and/or pre-determined interrupt request signals.

In accordance with another advantageous configuration the apparatus is coupled to a further bus that also transfers digital signals. In order to detect digital signals that are transferred on the further bus and that fulfil at least one pre-determined condition, the apparatus comprises a further detection mean.

It is also possible that the apparatus according to the invention is coupled to more than two busses. In such a case the apparatus comprises as many detection means as busses it is connected to.

In case the apparatus according to the invention is coupled to more than one bus, the measurement mean is also designed to measure the durations that pre-determined conditions are continuously fulfilled by the digital signals transferred on the further busses.

In accordance with the present invention, a method of measuring the duration, that a digital signal fulfilling at least one pre-determined condition is transferred on a bus, comprises the following steps:
(a) determining if at least one digital signal that is transferred on the bus fulfils the at least one pre-determined condition;
(b) generating a trigger signal if at least one digital signal fulfils the at least one pre-determined condition; and
(c) measuring the duration the at least one pre-determined condition is continuously fulfilled by the at least one digital signal transferred on the bus, by analysing the trigger signal.

The method according to the invention has the same advantages over conventional methods as the apparatus according to claim 1.

The invention is explained below in an exemplary manner with reference to the drawings, in which
- Fig. 1: shows a hardware block HW_BLOCK as an exemplary embodiment of the apparatus according to the invention;
- Fig. 2: shows an exemplary embodiment of the monitor logics TRIG_BUS_1, TRIG_BUS_2 and TRIG_BUS_3 of the hardware block HW_BLOCK shown in Fig. 1; and
- Fig. 3: shows how to detect addresses and address ranges.

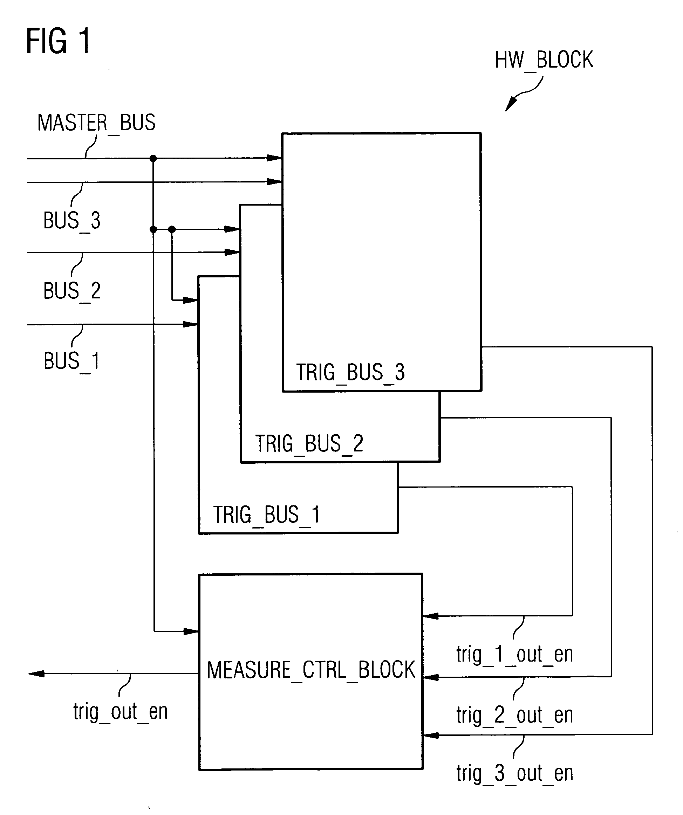

Fig. 1 shows a block diagram of a hardware block HW_BLOCK as an exemplary embodiment of the invention. The architecture depicted in Fig. 1 comprises monitor logics TRIG_BUS_1, TRIG_BUS_2 and TRIG_BUS_3 as well as a measurement and control block MEASURE_CTRL_BLOCK.

Input terminals of the monitor logics TRIG_BUS_1, TRIG_BUS_2 and TRIG_BUS_3 are coupled to busses BUS_1, BUS_2 and BUS_3, respectively. Furthermore an input terminal of each of the monitor logics TRIG_BUS_1, TRIG_BUS_2 and TRIG_BUS_3 as well as an input terminal of the measurement and control block MEASURE_CTRL_BLOCK is connected to a master bus MASTER_BUS. The monitor logics TRIG_BUS_1, TRIG_BUS_2 and TRIG_BUS_3 generate signals trig_1_out_en, trig_2_out_en and trig_3_out_en on their output terminals, respectively, and feed input terminals of the measurement and control block MEASURE_CTRL_BLOCK with these signals trig_1_out_en, trig_2_out_en and trig_3_out_en. The measurement and control block MEASURE_CTRL_BLOCK outputs a signal trig_out_en.

The hardware block HW_BLOCK allows to measure the duration of an event related to one of the busses BUS_1, BUS_2 and BUS_3. For example, this event could take place in a component coupled to one of the busses BUS_1, BUS_2 and BUS_3. Such an event can for instance be detected by watching addresses on the address bus or by watching the interrupt request line or by watching a bus request or a memory read/write access request. For that purpose, the monitor logics TRIG_BUS_1, TRIG_BUS_2 and TRIG_BUS_3 monitor the busses BUS_1, BUS_2 and BUS_3, respectively. In case an event appearing on the bus BUS_x (with x ∈ {1; 2; 3}) complies with pre-determined criteria, the corresponding monitor logic TRIG_BUS_x reports this to the measurement and control block MEASURE_CTRL_BLOCK by switching the signal trig_x_out_en to a logical low level. As soon as the event disappears, the signal trig_x_out_en is switched back to a logical high level. The measurement and control block MEASURE_CTRL_BLOCK determines the duration of the event by measuring the time the signal trig_x_out_en remains on a logical low level.

For measuring the duration of an event the measurement and control block MEASURE_CTRL_BLOCK employs a reference time signal. The reference time signal can for example be obtained from 10,000 processor cycles, several 32 kHz clock cycles, a GSM frame or a PLL clock signal. Another function of the measurement and control block MEASURE_CTRL_BLOCK is to configure the monitor logics TRIG_BUS_1, TRIG_BUS_2 and TRIG_BUS_3. For that purpose the measurement and control block MEASURE_CTRL_BLOCK contains control and identification registers. The measurement and control block MEASURE_CTRL_BLOCK may be designed to be programmed by the user.

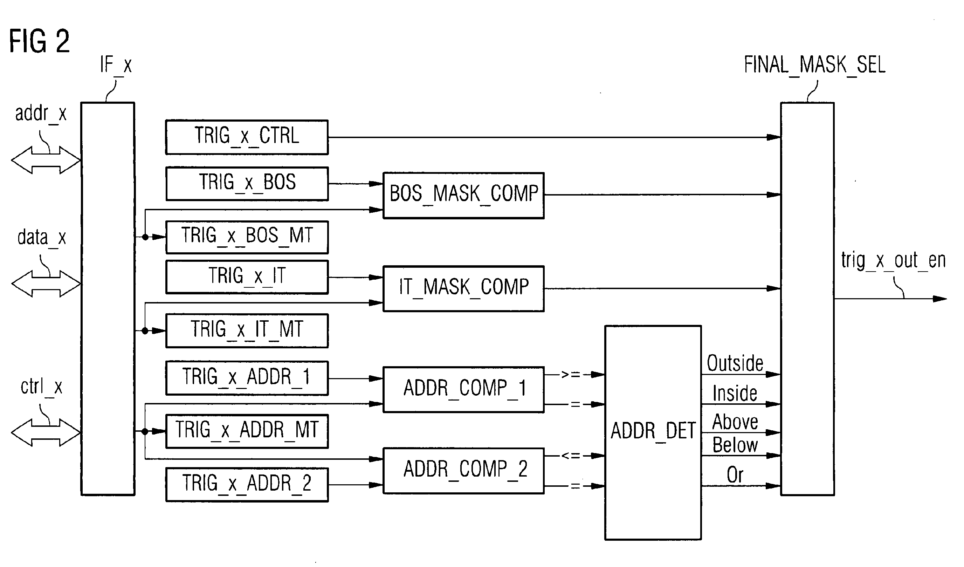

Fig. 2 shows a block diagram of the monitor logics TRIG_BUS_1, TRIG_BUS_2 and TRIG_BUS_3. In order to avoid losing generality, the variable x in Fig. 2 stands for either 1, 2 or 3 referring to the busses BUS_1, BUS_2 and BUS_3 as well as to the corresponding monitor logics TRIG_BUS_1, TRIG_BUS_2 and TRIG_BUS_3, respectively.

The bus BUS_x feeds the monitor logic TRIG_BUS_x with addresses addr_x, data data_x and control signals ctrl_x via an interface IF_x. This enables the monitor logic TRIG_BUS_x to watch addresses, bus operation signals and interrupt request signals on the bus BUS_x.

For watching addresses transferred on the bus BUS_x, the monitor logic TRIG_BUS_x comprises registers TRIG_x_ADDR_1, TRIG_x_ADDR_2 and TRIG_x_ADDR_MT, comparators ADDR_COMP_1 and ADDR_COMP_2 as well as an address detector ADDR_DET. The monitor logic TRIG_BUS_x scans the bus BUS_x for addresses addr x defined by the addresses stored in the registers TRIG_x_ADDR_1 1 and TRIG_ADDR_2. For that, the comparator ADDR_COMP_1 compares the addresses addr_x transferred over the bus BUS_x to the address or the addresses stored in the registers TRIG_x_ADDR_1. The comparator ADDR_COMP_1 outputs signals indicating whether an address addr_x is greater than or equal to the values stored in the registers TRIG_x_ADDR_1. In an analogous manner the comparator ADDR_COMP_2 compares the addresses addr_x transferred over the bus BUS_x to the address or the addresses stored in the registers TRIG_x_ADDR_2. The comparator ADDR_COMP_2 outputs signals indicating whether an address addr_x is smaller than or equal to the values stored in the registers TRIG_x_ADDR_2.

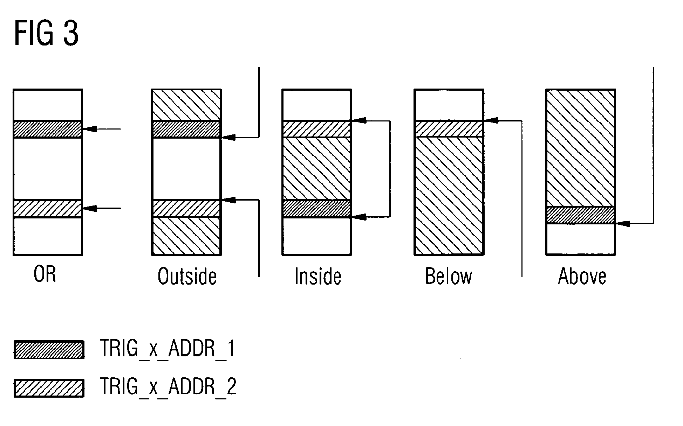

The address detector ADDR_DET combines the output signals of the comparators ADDR_COMP_1 and ADDR_COMP_2. As a result the address detector ADDR DET indicates the range in that the address addr_x is located in relation to the addresses stored in the registers TRIG_x_ADDR_1 and TRIG_x_ADDR_2. Fig. 3 illustrates the possible ranges. The detected range is highlighted by a doted area. In particular, the address addr_x can be equal to one of the addresses stored in the registers TRIG_x_ADDR_1 and TRIG_x_ADDR_2 or it can be located inside or outside the range defined by the values of the registers TRIG_x_ADDR_1 and TRIG_x_ADDR_2 or it can be below than one of the addresses of the registers TRIG_x_ADDR_2 or above one of the addresses of the registers TRIG_x_ADDR_1.

For watching bus operation signals of the bus BUS_x, the monitor logic TRIG_BUS_x comprises registers TRIG_x_BOS and TRIG_x_BOS_MT as well as a mask and compare unit BOS_MASK_COMP. The registers TRIG_x_BOS define mask and trigger values for the bus operation signals, which are driven in the address phase of a bus access. The mask and compare unit BOS_MASK_COMP uses these mask and trigger values to scan the bus BUS_x for bus operation signals that match these mask and trigger values. A match is indicated by the output signal of the mask and compare unit BOS_MASK_COMP.

For watching interrupt request signals, the monitor logic TRIG_BUS_x comprises registers TRIG_x_IT and TRIG_x_IT_MT as well as a mask and compare unit IT_MASK_COMP. The registers TRIG_x_IT define mask and trigger values for the interrupt request signals. The mask and compare unit IT_MASK_COMP uses these mask and trigger values to scan the bus BUS_x for interrupt request signals that match these mask and trigger values. A match is indicated by the output signal of the mask and compare unit IT_MASK_COMP.

A final mask and selection unit FINAL_MASK_SEL is used to combine the output signals of the address detector ADDR_DET and the mask and compare units BOS_MASK_COMP and IT_MASK_COMP. The final mask and selection unit FINAL_MASK_SEL is controlled by the values stored in registers TRIG_x_CTRL. Consequently the output signals of the address detector ADDR DET and the mask and compare units BOS_MASK_COMP and IT_MASK_COMP can be combined in any way. For instance, the bus BUS_x can be scanned for an event defined by a certain address or address range and a certain bus operation signal. This could for example be a read or write access or a burst containing a certain address.

As long as the condition defined by the values of the registers TRIG_x_CTRL is met, the output signal trig_x_out_en of the final mask and selection unit FINAL_MASK_SEL is low. This lasts at least for one bus clock cycle, otherwise the event is not relevant for the duration calculation.

Switching the signal trig_x_out_en from a logical high level to a logical low level indicates to the measurement and control block MEASURE_CTRL_BLOCK that the event the bus BUS_x is scanned for has been detected. Thus, such a switch of the signal trig_x_out_en triggers the start of the time measurement in the measurement and control block MEASURE_CTRL_BLOCK. Once the duration of the event has been determined, the duration value is written in the corresponding registers TRIG_x_ADDR_MT, TRIG_x_BOS_MT or TRIG_x_IT_MT.

The signal trig_x_out_en can also externally be monitored via monitoring pins.

The values of the registers TRIG_x_ADDR_1, TRIG_x_ADDR_2, TRIG_x_BOS, TRIG_x_IT and TRIG_x_CTRL are set by the measurement and control block MEASURE_CTRL_BLOCK.

The measurement and control block MEASURE_CTRL_BLOCK contains several registers that are briefly discussed in the following. The meaning of the binary settings of these registers is also explained.
- TRIG: state of the signal trig_x_out_en
0: fired, reset by writing to the register REARM
1: armed
- ALL_SHOTS: rearms the signal trig_x_out_en once it has fired if set.
0: An event that triggers a time measurement can occur only one time. Once a time measurement has been triggered, a duration determination is processed and the registers TRIG_x_ADDR_MT, TRIG_x_BOS_MT and TRIG_x_IT_MT will not be overwritten.
1: An event that triggers a time measurement can occur after each following trigger event. In this case the duration determination is processed and the registers TRIG_x_ADDR_MT, TRIG_x_BOS_MT and TRIG_x_IT_MT are refreshed after each reference time duration.
- REARM: rearms the signal trig_x_out_en and resets the status signals in the registers BUS_1_S, BUS_2_S and BUS_3_S.
- BUS_1_M: mask for the signal trig_1_out_en
0: The signal trig_1_out_en from the monitor logic TRIG_BUS_1 is not used for generating the signal trig_out_en.
1: The signal trig_1_out_en from the monitor logic TRIG_BUS_1 is used for generating the signal trig_out_en.
- BUS_2_M: mask for the signal trig_2_out_en
0: The signal trig_2_out_en from the monitor logic TRIG_BUS_2 is not used for generating the signal trig_out_en.
1: The signal trig_2_out_en from the monitor logic TRIG_BUS_2 is used for generating the signal trig_out_en.
- BUS_3_M: mask for the signal trig_3_out_en
0: The signal trig_3_out_en from the monitor logic TRIG_BUS_3 is not used for generating the signal trig_out_en.
1: The signal trig_3_out_en from the monitor logic TRIG_BUS_3 is used for generating the signal trig_out_en.
- BUS_1_S: state of the signal trig_1_out_en
0: No break from the monitor logic TRIG_BUS_1 caused the signal trig_out_en.
1: A break from the monitor logic TRIG_BUS_1 caused the signal trig_out_en.
- BUS_2_S: state of the signal trig_2_out_en
0: No break from the monitor logic TRIG_BUS_2 caused the signal trig_out_en.
1: A break from the monitor logic TRIG_BUS_2 caused the signal trig_out_en.
- BUS_3_S: state of the signal trig_3_out_en
0: No break from the monitor logic TRIG_BUS_3 caused the signal trig_out_en.
1: A break from the monitor logic TRIG_BUS_3 caused the signal trig_out_en.

The registers TRIG_x_CTRL of each monitor logic TRIG_BUS_x consist of several registers that are briefly discussed in the following. The meaning of the binary settings of these registers is also explained.
- TRIG: state of the signal trig_x_out_en
0: fired, reset by writing to the register REARM
1: armed
- REARM: rearms the signal trig_x_out_en. The registers TRIG_x_ADDR_MT, TRIG_x_BOS_MT and TRIG_x_IT_MT are reset if the register ALL_SHOTS of the measurement and control block MEASURE_CTRL_BLOCK is not set.
1: to rearm, this bit always reads '0'.
- ADDRM: address range mask
0: The address range selection field ADDRS is not used.
1: The address range selection field ADDRS is used.
- ADDRS: selects the address range, with address 1 being the address stored in the register TRIG_x_ADDR_1 and address 2 being the address stored in the register TRIG_x_ADDR_2.
000: address 1 OR address 2
001: address 1 OR above address 1
010: address 1 OR below address 2
011: address 1 OR address 2 OR outside
100: address 1 OR address 2 OR inside
101: reserved
110: reserved
111: reserved
- BUSCONM: bus control mask
0: The address range selection is unremarkable.
1: The condition stored in the register TRIG_x_BOS is used.
- ITMASM: interrupt mask
0: An interrupt event condition is used.
1: The condition stored in the register TRIG_x_IT is used.

The registers TRIG_x_ADDR_MT, TRIG_x_BOS_MT and TRIG_x_IT_MT contain the results of the duration determination once the trigger condition has occurred.
- TRIG_x_ADDR_MT: duration of the event that met the address condition if enabled; counted as number of clock cycles.
- TRIG_x_BOS_MT: duration of the event that met the bus control condition if enabled AND the address condition if enabled; counted as number of clock cycles.
- TRIG_x_IT_MT: duration of the event that met the interrupt request condition if enabled AND the address condition if enabled; counted as number of clock cycles.

The registers TRIG_x_BOS and TRIG_x_IT can be divided into two parts, respectively. In the lower half of the registers TRIG_x_BOS and TRIG_x_IT the bus control signals and the interrupt control signals that can lead to a trigger event are defined in value fields and bits, respectively. These value fields and bits are marked with a suffix "_Valid". In the upper half of the registers TRIG_x_BOS and TRIG_x_IT mask bits are defined for each field or bit in the lower half of the registers TRIG_x_BOS and TRIG_x_IT. If a mask bit is high, then the field or bit it controls is compared to the equivalent bus values of the bus BUS_x. If a mask bit is low, then the field or bit it controls is not used for detecting an event. The mask bits are marked with a suffix "_Mask".

The signals outputted by the mask and compare units BOS_MASK_COMP and IT_MASK_COMP only indicate an event if all enabled bus control fields or interrupt control fields or bits are identical to their equivalent bus signals.

The registers of TRIG_x_BOS are as follows:
- Data_Valid: If Data_Mask is valid, this value is compared to the value present on the bus BUS_x if applicable (0: opcode fetched; 1: data access).
- Cache_Valid: If Cache_Mask is valid, this value is compared to the value present on the bus BUS_x if applicable (0: not cacheable; 1: cacheable).
- Write_Valid: If Write_Mask is valid, this value is compared to the value present on the bus BUS_x if applicable (0: read access; 1: write access).
- FPI_1_Valid: If FPI_1_Mask is valid, this value is compared to the value present on the bus BUS_x if applicable (0: FPI_1 is not accessed; 1: FPI_1 is accessed).
- FPI_x_Valid: If FPI_x_Mask is valid, this value is compared to the value present on the bus BUS_x if applicable (0: FPI_x is not accessed; 1: FPI_x is accessed).
- BUS_x_Valid: If BUS_x_Mask is valid, this value is compared to the value present on the bus BUS_x if applicable (0: BUS_x is not accessed; 1: BUS_x is accessed).
- IDLE_Valid: If IDLE_Mask is valid, this value is compared to the value present on the bus BUS_x if applicable (0: CPU is not in idle mode; 1: CPU is in idle mode).
- Data_Mask: If enabled, the value of Data_Valid is compared to the value on the bus BUS_x. If the condition is then met, the duration is determined and the result is stored in the register TRIG_x_BOS_MT.
- Cache_Mask: If enabled, the value of Cache_Valid is compared to the value on the bus BUS_x. If the condition is then met, the duration is determined and the result is stored in the register TRIG_x_BOS_MT.
- Write_Mask: If enabled, the value of Write_Valid is compared to the value on the bus BUS_x. If the condition is then met, the duration is determined and the result is stored in the register TRIG_x_BOS_MT.
- FPI_1_Mask: If enabled, the value of FPI_1_Valid is compared to the value on the bus BUS_x. If the condition is then met, the duration is determined and the result is stored in the register TRIG_x_BOS_MT.
- FPI_x_Mask: If enabled, the value of FPI_x_Valid is compared to the value on the bus BUS_x. If the condition is then met, the duration is determined and the result is stored in the register TRIG_x_BOS_MT.
- BUS_x_Mask: If enabled, the value of BUS_x_Valid is compared to the value on the bus BUS_x. If the condition is then met, the duration is determined and the result is stored in the register TRIG_x_BOS_MT.
- IDLE_Mask: If enabled, the value of IDLE_Valid is compared to the value on the bus BUS_x. If the condition is then met, the duration is determined and the result is stored in the register TRIG_x_BOS_MT.

The registers of TRIG_x_IT are as follows:
- IT_Request_Valid: If IT_Request_Mask is valid, this value is compared to the value present on the interrupt line of the bus BUS_x if applicable (0: no interrupt request; 1: interrupt request).
- IT_Served_Valid: If IT_Served_Mask is valid, this value is compared to the value present on the interrupt line of the bus BUS_x if applicable (0: interrupt is pending; 1: interrupt is served).
- IT_Request_Mask: If enabled, the value of IT_Request_Valid is compared to the value present on the interrupt line of the bus BUS_x. If the condition is then met, the duration is determined and the result is stored in the register TRIG_x_IT_MT.
- IT_Served_Mask: If enabled, the value of IT_Served_Valid is compared to the value present on the interrupt line of the bus BUS_x. If the condition is then met, the duration is determined and the result is stored in the register TRIG_x_IT_MT.

In the following the use of the hardware block HW_BLOCK according to Fig. 1 is exemplified. For this example a complex system comprising two internal memories MEM_1 and MEM_2 is considered. Each of the memories MEM_1 and MEM_2 contains 128 words. The two memories MEM_1 and MEM_2 are supposed to be accessed at the same time by the software.

In this example the hardware block HW_BLOCK is configured as follows. Read access and write access signals on each memory MEM_1 and MEM_2 are monitored and trigger the output signals of the mask and compare unit BOS_MASK_COMP. The address detector ADDR_DET triggers the start of a time measurement when the memory MEM_1 is accessed between TRIG_MEM_1_ADDR_1 and TRIG_MEM_1_ADDR_2 or the memory MEM_2 is accessed between TRIG_MEM_2_ADDR_1 and TRIG_MEM_2_ADDR_2.

First measurements could lead to the fact that the memories MEM_1 and MEM_2 are accessed less than 50 % of the time by the running protocol stack, respectively. However different settings of the registers TRIG_x_BOS, TRIG_x_ADDR_1 and TRIG_x_ADDR_2 could lead to the fact that the memories MEM_1 and MEM_2 are not accessed at the same time by the protocol stack although they could be. In order to measure the time between consecutive read and write accesses to both memories MEM_1 and MEM_2, the settings of the registers could be changed again. As a result it may be found out that it is not mandatory to employ two memories each containing 128 words, but that only one memory containing 256 words would be sufficient.

Scanning the memory accesses with respect to the address range may allow to determine if the whole memory space is required. Otherwise the memory size could be decreased and implementation area could be saved.

## Claims

1. An apparatus (HW_BLOCK) that is coupled to a bus (BUS_1, BUS_2, BUS_3) transferring digital signals (addr_x, data_x, ctrl_x), comprising:
- a detection mean (TRIG_BUS_1, TRIG_BUS_2, TRIG_BUS_3) for detecting at least one digital signal (addr_x, data_x, ctrl_x) that is transferred on the bus (BUS_1, BUS_2, BUS_3) and that fulfils at least one pre-determined condition, with the detection mean (TRIG_BUS_1, TRIG_BUS_2, TRIG_BUS_3) generating an output signal (trig_1_out_en, trig_2_out_en, trig_3_out_en) indicating whether at least one digital signal (addr_x, data_x, ctrl_x) fulfils the at least one pre-determined condition or not, and
- a measurement mean (MEASURE_CTRL_BLOCK) for measuring the duration the at least one pre-determined condition is continuously fulfilled by at least one digital signal (addr_x, data_x, ctrl_x) transferred on the bus (BUS_1, BUS_2, BUS_3) by analysing the output signal (trig_1_out_en, trig_2_out_en, trig_3_out_en) of the detection mean (TRIG_BUS_1, TRIG_BUS_2, TRIG_BUS_3).

2. The apparatus (HW_BLOCK) according to claim 1,
**characterized in that**
- the detection mean (TRIG_BUS_1, TRIG_BUS_2, TRIG_BUS_3) comprises a comparison mean (ADDR_COMP_1, ADDR_COMP_2, BOS_MASK_COMP, IT_MASK_COMP) for comparing the digital signals (addr_x, data_x, ctrl_x) transferred on the bus (BUS_1, BUS_2, BUS_3) to pre-determined signals or values, and/or
- the detection mean (TRIG_BUS_1, TRIG_BUS_2, TRIG_BUS_3) comprises a mask mean (BOS_MASK_COMP, IT_MASK_COMP) for examining if the digital signals (addr_x, data_x, ctrl_x) transferred on the bus (BUS_1, BUS_2, BUS_3) fit into a pre-determined mask.

3. The apparatus (HW_BLOCK) according to claim 1 or claim 2,
**characterized in that**
- the measurement mean (MEASURE_CTRL_BLOCK) comprises a reference clock.

4. The apparatus (HW_BLOCK) according to one or more of the preceding claims,
**characterized in that**
- the digital signals transferred on the bus (BUS_1, BUS_2, BUS_3) are data (data_x) or addresses (addr_x) or control signals (ctrl_x).

5. The apparatus (HW_BLOCK) according to one or more of the preceding claims,
**characterized in that**
- the detection mean (TRIG_BUS_1, TRIG_BUS_2, TRIG_BUS_3) comprises at least one register (TRIG_x_ADDR_1, TRIG_x_ADDR_2, TRIG_x_BOS, TRIG_x_IT) for storing data defining the at least one pre-determined condition.

6. The apparatus (HW_BLOCK) according to one or more of the preceding claims,
**characterized in that**
- the apparatus (HW_BLOCK) comprises a control mean (MEASURE_CTRL_BLOCK) for configuring the detection mean (TRIG_BUS_1, TRIG_BUS_2, TRIG_BUS_3).

7. The apparatus (HW_BLOCK) according to claims 5 and 6,
**characterized in that**
- the control mean (MEASURE_CTRL_BLOCK) is designed to write data in the at least one register (TRIG_x_ADDR_1, TRIG_x_ADDR_2, TRIG_x_BOS, TRIG_x_IT).

8. The apparatus (HW_BLOCK) according to claim 6 or claim 7,
**characterized in that**
- the control mean (MEASURE_CTRL_BLOCK) is programmable.

9. The apparatus (HW_BLOCK) according to one or more of the preceding claims,
**characterized in that**
- the apparatus (HW_BLOCK) is realized in hardware.

10. The apparatus (HW_BLOCK) according to one or more of the preceding claims,
**characterized in that**
- the detection mean (TRIG_BUS_1, TRIG_BUS_2, TRIG_BUS_3) is designed to scan the bus (BUS_1, BUS_2, BUS_3) for pre-determined addresses or address ranges and/or for pre-determined bus operation signals and/or for pre-determined interrupt request signals.

11. The apparatus (HW_BLOCK) according to one or more of the preceding claims,
**characterized in that**
- the apparatus (HW_BLOCK) is coupled to a further bus (BUS_1, BUS_2, BUS_3) transferring digital signals (addr_x, data_x, ctrl_x), and
- the apparatus (HW_BLOCK) comprises a further detection mean (TRIG_BUS_1, TRIG_BUS_2, TRIG_BUS_3) for detecting at least one digital signal (addr_x, data_x, ctrl_x) that is transferred on the further bus (BUS_1, BUS_2, BUS_3) and that fulfils at least one pre-determined further condition, with the further detection mean (TRIG_BUS_1, TRIG_BUS_2, TRIG_BUS_3) generating a further output signal (trig_1_out_en, trig_2_out_en, trig_3_out_en) indicating whether at least one digital signal (addr_x, data_x, ctrl_x) fulfils the at least one pre-determined further condition or not.

12. The apparatus (HW_BLOCK) according to claim 11,
**characterized in that**
- the measurement mean (MEASURE_CTRL_BLOCK) is designed to measure the duration the at least one pre-determined condition is continuously fulfilled by at least one digital signal (addr_x, data_x, ctrl_x) transferred on the further bus (BUS_1, BUS_2, BUS_3) by analysing the further output signal (trig_1_out_en, trig_2_out_en, trig_3_out_en) of the further detection mean (TRIG_BUS_1, TRIG_BUS_2, TRIG_BUS_3).

13. Method of measuring the duration that a digital signal (addr_x, data_x, ctrl_x) fulfilling at least one pre-determined condition is transferred on a bus (BUS_1, BUS_2, BUS_3), with the method being comprised of the following steps:
(a) determining if at least one digital signal (addr_x, data_x, ctrl_x) that is transferred on the bus (BUS_1, BUS_2, BUS_3) fulfils the at least one pre-determined condition;
(b) generating a trigger signal (trig_1_out_en, trig_2_out_en, trig_3_out_en) if at least one digital signal (addr_x, data_x, ctrl_x) fulfils the at least one pre-determined condition; and
(c) measuring the duration the at least one pre-determined condition is continuously fulfilled by the at least one digital signal (addr_x, data_x, ctrl_x) transferred on the bus (BUS_1, BUS_2, BUS_3) by analysing the trigger signal (trig_1_out_en, trig_2_out_en, trig_3_out_en).

14. Method according to claim 13,
**characterized in that**
- in step (a) the digital signals (addr_x, data_x, ctrl_x) transferred on the bus (BUS_1, BUS_2, BUS_3) are compared to at least one pre-determined signal or value, and/or
- in step (a) the digital signals (addr_x, data_x, ctrl_x) transferred on the bus (BUS_1, BUS_2, BUS_3) are examined if they fit into a pre-determined mask.

15. Method according to claim 13 or claim 14,
**characterized in that**
- in step (c) the duration that the condition is continuously fulfilled by the at least one digital signal (addr_x, data_x, ctrl_x) is measured by employing a reference clock.

16. Method according to one or more of the claims 13 to 15,
**characterized in that**
- the digital signals transferred on the bus (BUS_1, BUS_2, BUS_3) are data (data_x) or addresses (addr_x) or control signals (ctrl_x).

17. Method according to one or more of the claims 13 to 16,
**characterized in that**
- in step (a) the bus (BUS_1, BUS_2, BUS_3) is scanned for pre-determined addresses or address ranges and/or for pre-determined bus operation signals and/or for pre-determined interrupt request signals.
